(19) **Europäisches Patentamt / European Patent Office / Office européen des brevets**

(11) **EP 1 752 049 B1**

(12) **EUROPEAN PATENT SPECIFICATION**

(45) Date of publication and mention of the grant of the patent:
**21.12.2011 Bulletin 2011/51**

(51) Int Cl.:
*A23K 1/02* (2006.01)   *A23K 1/16* (2006.01)
*A23K 1/18* (2006.01)   *A23K 1/20* (2006.01)

(21) Application number: **05741591.1**

(22) Date of filing: **23.05.2005**

(86) International application number:
**PCT/JP2005/009334**

(87) International publication number:
**WO 2005/112660 (01.12.2005 Gazette 2005/48)**

(54) **GAMMA-AMINOBUTYRIC ACID FEEDING METHOD**

GAMMA-AMINOBUTTERSÄURE-FÜTTERUNGSVERFAHREN

PROCÉDÉ D'ALIMENTATION AVEC DE L'ACIDE GAMMA-AMINOBUTYRIQUE

(84) Designated Contracting States:
**AT BE BG CH CY CZ DE DK EE ES FI FR GB GR HU IE IS IT LI LT LU MC NL PL PT RO SE SI SK TR**

(30) Priority: **24.05.2004 JP 2004152997**

(43) Date of publication of application:
**14.02.2007 Bulletin 2007/07**

(73) Proprietor: **Nippon Zenyaku Kogyo Co., Ltd.**
**Asaka-machi, Koriyama-shi**
**Fukushima 963-0196 (JP)**

(72) Inventors:
 • **MATSUNAGA, M.**
  **c/o Nippon Zenyaku Kogyo Co., Ltd.**
  **Koriyama-shi,**
  **Fukushima 9630196 (JP)**
 • **SAZE, Kohichi**
  **c/o Nippon Zenyaku Kogyo Co., Ltd.,**
  **Koriyama-shi,**
  **Fukushima 9630196 (JP)**
 • **MATSUNAGA, T.**
  **c/o Nippon Zenyaku Kogyo Co., Ltd.**
  **Koriyama-shi,**
  **Fukushima 9630196 (JP)**
 • **SUZUTA, Y.**
  **c/o Nippon Zenyaku Kogyo Co., Ltd.**
  **Koriyama-shi,**
  **Fukushima 9630196 (JP)**

(74) Representative: **LOUIS, PÖHLAU, LOHRENTZ**
**Patentanwälte**
**Postfach 30 55**
**90014 Nürnberg (DE)**

(56) References cited:
| | |
|---|---|
| WO-A-03/013495 | WO-A-2004/021801 |
| BE-A- 686 921 | FR-A1- 2 684 522 |
| GB-A- 1 091 264 | GB-A- 1 315 174 |
| JP-A- 62 296 826 | JP-A- 2001 335 505 |
| JP-A- 2002 065 175 | JP-A- 2002 088 036 |
| JP-A- 2003 250 464 | KR-A- 20040 042 986 |
| US-A- 4 005 192 | US-A- 4 904 486 |
| US-B1- 6 255 287 | |

 • DAWSON, L.E.R., AND MAYNE, C.S.: "The effect of intraruminal infusions of amines and gamma amino butyric acid on rumen fermentation parameters and food intake of steers offered grass silage" Animal Feed Science and Technology, vol. 63, 1996, pages 35-49, XP002445331 Elsevier
 • LONG, S. K., HILL, E.C., AND WHEATON, T.A.: "Florida citrus molasses as a fermentation substrate", APPLIED MICROBIOLOGY, vol. 15, no. 5, 1967, pages 1091-1094, American Society for Microbiology ISSN: 0003-6919

**Description**

Technical Field

The present invention relates to a method for supply of γ-aminobutyric acid, and more specifically relates to a method for supply of γ-aminobutyric acid which make it possible to efficiently supply γ-aminobutyric acid to animal and effectively relieve stress of the animal.

Background Art

γ-Aminobutyric acid (generally called and hereinafter referred to as GABA) is a kind of amino acid prevailing widely in animal and plant kingdoms and has been known to have functions such as neurodepressive and mood-stabilizing effects. It is nowadays noted to be a substance effective for, for example, antihypertension, cerebric metabolism stimulation, prevention of arteriosclerosis, prevention of hangover and skin activation (prevention of fleck) and researches and developments therefor have been implemented.

With respect to production of GABA, there have been proposed foodstuff and a method for producing the same wherein glutamic acid and/or sodium glutamate is affected by yeast for enrichment of GABA (see, for example, Reference 1).

There are also sesame foodstuff (GABA-containing sesame extract and extract powder) and a method for producing the same wherein sesame as starting stuff is processed with glutamic acid and/or salt thereof added for enrichment of GABA (see, for example, Reference 2).

Further, there is animal feed in which stuff derived from wheat young leaves is anaerobically heat treated for enrichment of GABA, the feed being used as a stress-relieving agent for animal (see, for example, Reference 3).

[Reference 1] Japanese Patent 2891296
[Reference 2] JP 2003-24015A
[Reference 3] JP 2002-65175A

BE 686921 is directed to a process for preparation of forage on the basis of proteins for ruminants.

WO 03/013495 A1 is directed to a formulation and a method for the reduction of stress in meat-producing animals.

US 4,005,192 is directed to a composition in substantially rigid block form for controlling or preventing bloat in animals.

Appl. Microbiol., Sept. 1967, p. 1091-1094 is directed to Florida citrus molasses as a fermentation substrate.

GB 1 315 174 is directed to molasses feed block for animals and method of making same.

Summary of the Invention

Problems to be Solved by the Invention

However, as mentioned above, for production of GABA, Reference 1 uses glutamic acid and/or sodium glutamate affected by yeast to obtain GABA-enriched foodstuff; in Reference 2, sesame used as starting stuff is processed with glutamic acid and/or salt thereof added thereto to obtain GABA-enriched sesame foodstuff; and in Reference 3, stuff derived from wheat young leaves is dipped in, for example, aqueous glutamic acid solution for conversion from glutamic acid into GABA to thereby effect GABA-enriched treatment. In any of the ways, GABA is difficult to produce; and increase in rate of content of GABA is technically difficult to effect. Thus, GABA is generally expensive.

Therefore, it is hardly adopted in ordinary livestock farms to supply GABA expensive as mentioned above to livestock. Furthermore, supplying GABA to livestock itself has problems that GABA mere mixed into feedstuff for supplying it to livestock may result in falling of the mixed GAGA in vain into disposal and that GABA alone mixed into feedstuff for supplying it to livestock cannot exhibit effectiveness due to supplying of GABA.

The invention has its object to provide a method for supply of γ-aminobutyric acid which make it possible to effectively supply γ-aminobutyric acid to livestock and at the same time to effectively enhance stress-relieving effect.

Means or Measures for Solving the Problems

The invention is directed to a method for supply of γ-aminobutyric acid according to any one of claims 1 and 2. The animal may be livestock. The animal may be pet animal. The feedstuff blocks solidified are fed to animal through licking of the animal. Feeding γ-aminobutyric acid together with molasses to animal can relieve stress of the animal. Feeding γ-aminobutyric acid together with molasses to livestock in a period from 4-30 days before transportation to just before the transportation can suppress reduction in body weight of livestock due to the transportation.

Effects of the Invention

In order to perform the method of the invention, GABA is mixed with molasses into feedstuff which is fed to animal, so that animal ingests GABA together with the molasses. This improves effectiveness in ingestion of GABA in comparison with ingestion of GABA only, so that stress of animal is reduced, meat characteristics are enhanced in the case of livestock, and reduction in body weight upon transportation of livestock can be effectively suppressed, thereby enhancing productivity of livestock.

Reduction in stress of animal relieves ramp of livestock sensitive to noises and livestock's disfavor on their climbing onto a lorry upon transportation, which facilitate guiding work and the like of livestock.

Since GABA is effectively utilized for animal, an amount of GABA to be supplied to animal can be substantially reduced and thus cost for supplying GABA to animal can be reduced.

When animal is allowed to lick the feedstuff which is a mixture of GABA with molasses and solidified into blocks, according to the method of the invention according to any one of claim 1 and claim 2, the animal can ingest GABA stably and without waste. Thus, GABA, which is expensive, can be effectively supplied to animal.

Brief Description of the Drawings

[Fig. 1] A block diagram showing a process for producing GABA-mixed molasses feedstuff blocks.
[Fig. 2] A graph comparatively showing IgA concentration in mice's appendiceal contents in a case where the mice are supplied with a mixed solution of molasses with Pharma GABA 20 similar in composition to the GABA-mixed molasses feedstuff block and IgA concentrations in other comparative examples.
[Fig. 3] A graph comparatively showing meat characteristics at Farm A in beefs which are allowed to lick the GABA-mixed molasses feedstuff blocks and meat characteristics of control group.
[Fig. 4] A graph comparatively showing meat characteristics at Farm B in beefs B which are allowed to lick the GABA-mixed molasses feedstuff blocks and meat characteristics of control group.
[Fig. 5] A graph comparatively showing meat characteristics at Farm C in beefs which are allowed to lick the GABA-mixed molasses feedstuff blocks and meat characteristics of control group.

Best Mode for Carrying Out the Invention

Preferable examples of the invention will be described.
The invention is directed to a method according to any one of claim 1 and claim 2 with a main purpose of relieving stress of animal. In the feedstuff, at least 0.001% by weight of GABA is mixed into molasses. GABA may be any marketed GABA for food; for example, "Pharma GABA 20" produced by Pharma Foods International Co., Ltd. may be used which has GABA highly concentrated and enriched through lactobacillus fermentation, though GABA is not limited to GABA deriving from this product. The feedstuff is fed to animal in the form of solidified block or (for example, biscuit-shaped) briquette.

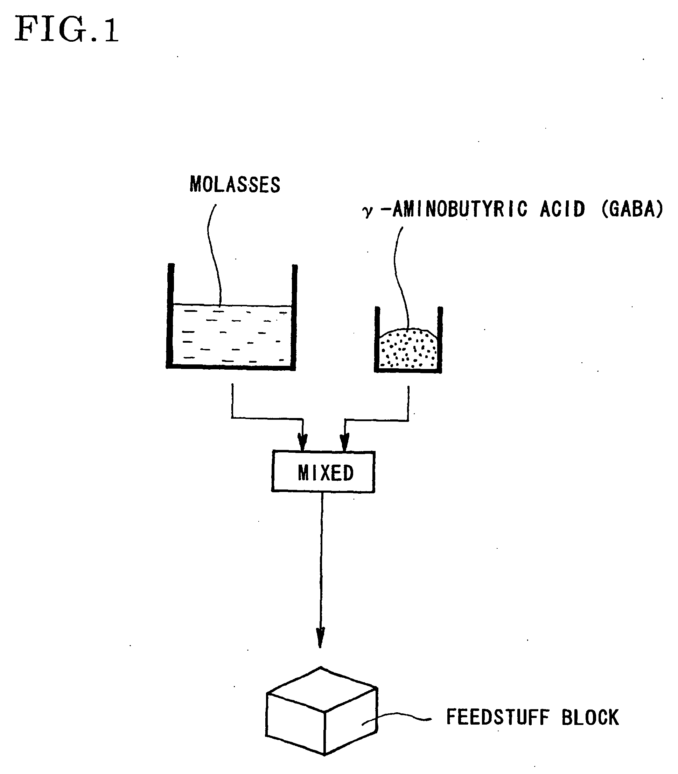

Fig. 1 shows a case where GABA is uniformly mixed into molasses, the mixture being solidified into a required size of blocks. The feedstuff blocks may be shaped to have a size range in term of weight for example in a range of 40 kg - 1 kg or so, preferably in a range of 20 kg - 2 kg or so, more preferably in a range of 15 kg - 5 kg or so; preferably, the blocks have hardness to an extent that they do not readily collapse by animals' licking, e.g., with penetration degree in penetration test being 120 or less.

The thus produced feedstuff blocks are arranged, for example, in a feedstuff bath in a barn so as to allow the livestock and the like to lick them. As a result, by licking the feedstuff blocks, animal naturally ingests a required amount of GABA together with molasses, whereby GABA can be effectively supplied to animal. Since both molasses and GABA are palatable to animal, animal palatably licks the feedstuff blocks.

In mixing GABA into molasses as mentioned above, either or both of vitamin E and functional amino acid may be also mixed into the molasses and solidified into feedstuff blocks.

Feedstuff other than the above-mentioned blocks such as (for example, biscuit-like) briquette may be fed in the form of mixture with feed and the like.

Tests carried out for ascertaining effectiveness of the above-mentioned feedstuff will be described.

[Test 1] stress loading test on mice

Carried out was a test using mice in which bleeding on gastric inner walls of mice due to stress loading was compared between a case where feedstuff in the form of a mixed solution of Pharma GABA 20 (produced by Pharma Foods International Co., Ltd. and containing 20% by weight of GABA) with molasses is supplied and other comparative examples as mentioned below.

Pharma GABA 20 was dissolved in distilled water to provide Pharma GABA solution (1 mg/mL; 0.2 mg/mL in terms of GABA). Each plot was constituted by a group of five C3H/HeJ mice. For mice of a molasses + GABA plot, a mixture of the Pharma GABA solution (0.015 mL) with molasses (0.135 mL)(ratio of Pharma GABA : molasses being 1 : 9) was forcibly supplied to the mice, using pipette, by 0.15 mL/day (0.003 mg/day/head in terms of GABA) continuously for seven days. Similar supply was carried out continuously for seven days for each mice group of the other plots, i.e., a control plot (with forcible supply of distilled water (0.15 mL)), a molasses plot (with forcible supply of a mixed solution (0.15 mL) of molasses (0.135 mL) + distilled water (0.015 mL)) and a GABA plot (with forcible supply of a mixed solution (0.15 mL) of Pharma GABA solution (0.015 mL) + distilled water (0.135 mL); 0.003 mg/day/head in terms of GABA). On the 8th day, each mice group was loaded with forcible swimming stress for 3 hours; and then instantly their stomachs were extracted and incised to ascertain bleeding degrees of gastric inner walls, using a substantial microscope. Meanwhile, to each mouse of the plots, CE-2 feeding/breeding solid feedstuff (produced by CLEAR Japan, Inc.) was uninterruptedly fed as basic feedstuff; and the mice were allowed to freely drink water. The above-mentioned test was carried out twice. The results are shown in Tables 1 and 2 below.

Table 1

| FIRST TEST | Individual No. 1 | Individual No.2 | Individual No.3 | Individual No.4 | Individual No.5 | Average |
|---|---|---|---|---|---|---|
| Control Plot | 2 | 4 | 3 | 2 | 4 | $3.0 \pm 1.0$ |
| Molasses Plot | 2 | 2 | 3 | 2 | 3 | $2.4 \pm 0.5$ |
| GABA Plot | 3 | 0 | 4 | 2 | 4 | $2.6 \pm 1.7$ |
| Molasses + GABA Plot | 1 | 3 | 2 | 4 | 1 | $2.2 \pm 1.3$ |
| [SCORE] 4: severe bleeding, 3: moderate bleeding, 2: mild bleeding, 1: congestion, 0: no sign | | | | | | |

Table 2

| SECOND TEST | Individual No. 1 | Individual No.2 | Individual No.3 | Individual No.4 | Individual No.5 | Average |
|---|---|---|---|---|---|---|
| Control Plot | 2 | 3 | 1 | 2 | 3 | $2.0 \pm 0.7$ |
| Molasses Plot | 2 | 1 | 1 | 3 | 3 | $2.0 \pm 1.0$ |
| GABA Plot | 3 | 1 | 1 | 2 | 2 | $1.8 \pm 0.8$ |
| Molasses + GABA Plot | 2 | 2 | 0 | 0 | 1 | $1.0 \pm 1.0$ |

As is clear from the above Tables 1 and 2, the molasses + GABA plot has lower score averages in bleeding of gastric inner walls after stress loading than any of the control, molasses and GABA plots, which revealed the fact that stress is significantly reduced (Student's t-test; $p < 0.01$) by supply of a mixed solution of molasses with Pharma GABA 20. Thus, it is conceivable that stress of animal, e.g., livestock such as cattle, swine, horse, sheep, goat or fowl, pet animal such as dog or cat or human can be effectively relieved through supply of feedstuff having Pharma GABA 20 mixed into molasses and in the form of, for example, liquid, dust, powder, block or (for example, biscuit-like) briquette to animal.

[Test 2] Test for IgA concentrations in appendiceal contents, using mice (test for evaluating immunizing power)

Carried out was test using mice in which IgA concentrations in appendiceal contents (for immunizing power evaluation) were compared between a case where feedstuff in the form of the above-mentioned mixed solution was fed and the other comparative examples.

Pharma GABA 20 was dissolved in distilled water to provide a Pharma GABA solution (1 mg/mL; 0.2 mg/mL in terms of GABA). Each plot was constituted by a group of five C3H/HeJ mice. For mice of a molasses + GABA plot, a mixture of the Pharma GABA solution (0.015 mL) with molasses (0.136 mL)(rate of Pharma GABA : molasses being 1 : 9) was forcibly supplied to the mice, using pipette, by about 0.15 mL/day (0.003 mg/day/head in terms of GABA) continuously for 14 days. On the 15th day, appendices of the mice were extracted and body weight of each mouse was measured, the contents being suspended in PBS and centrifuged. Then, centrifuged supernatant fluid was filtered to remove suspended solids therfrom; IgA concentration in the solution was measured by a sandwich ELISA, using a mouse IgA quantitative Kit produced by Cosmo Bio Bethyl Inc.

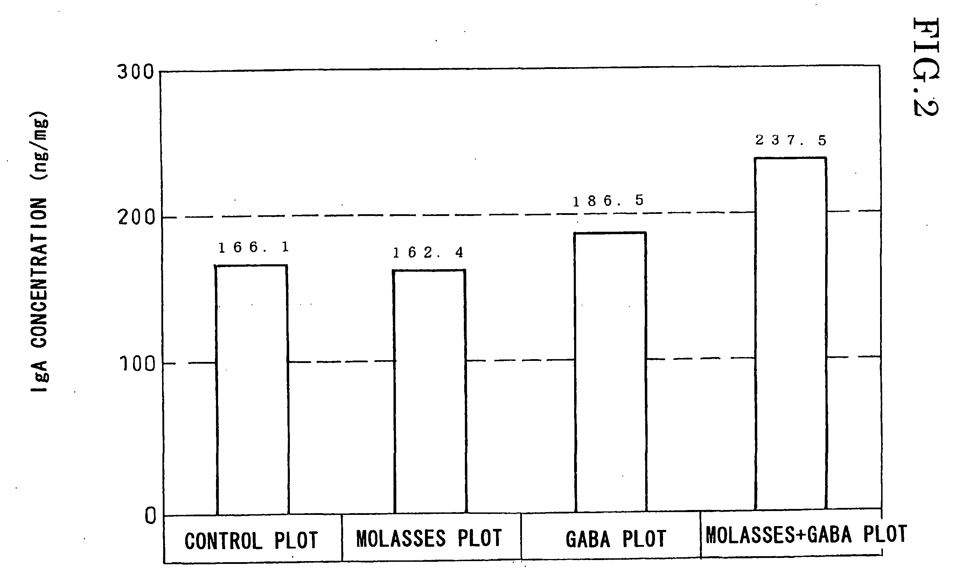

Similar supply was carried out continuously 14 days for each mice group of the other plots, i.e., a control plot (with forcible supply of distilled water (0.15 mL)), a molasses plot (with forcible supply of a mixed solution (0.15 mL) of molasses (0.135 mL) + distilled water (0.015 mL)) and a GABA plot (with forcible supply of a mixed solution (0.15 mL) of Pharma GABA solution (0.015 mL) + distilled water (0.135 mL); 0.003 mg/day/head in terms of GABA). For each of the plots, similar treatment was made to measure IgA concentrations in appendiceal contents and judgment was made, using Student's t-test. The test results are shown in Fig. 2.

As is clear from Fig. 2, the molasses + GABA plot has significantly increased IgA concentration in appendiceal contents ($P < 0.01$) in comparison with any of the control, molasses and GABA plots, which means that concurrent ingestion of GABA and molasses increases immunizing power and thus activity of mice. Thus, it is conceivable that immunity activity of animal, e.g., livestock such as cattle, swine, horse, sheep, goat or fowl, or pet animal such as dog or cat or human can be enhanced through supply of feedstuff having Pharma GABA 20 mixed into molasses and in the form of, for example, liquid, dust, powder, block or (for example, biscuit-like) briquette to animal.

The inventors prepared the following feedstuff blocks. Molasses blocks were obtained which do not depend on amount of GABA and have hardness enough for supplying to cattle.

[Prescribed Example 1]

Molasses (45.715% by weight), calcium phosphate (30% by weight), zeolite (8% by weight), alcohol (3% by weight), water (10% by weight), sodium chloride (3% by weight), tocopherol acetate (0.25% by weight) and Pharma GABA 20 (produced by Pharma Foods International Co., Ltd.; 0.035% by weight; 0.007% by weight in terms of GABA; 70 mg of GABA per kg) were mixed together and matured in a container for 1-3 days into solidification, thereby providing GABA-mixed molasses feedstuff blocks. The prepared GABA-mixed molasses feedstuff blocks on the 4th day of production after maturation have penetration degree of 69.5 and exhibit physical properties enough for licking by cattle.

[Prescribed Embodiment 2]

Molasses (45.715% by weight), calcium phosphate (30% by weight), zeolite (5% by weight), alcohol (3% by weight), water (10% by weight), sodium chloride (3% by weight), tocopherol acetate (0.25% by weight) and Pharma GABA 20 (produced by Pharma Foods International Co., Ltd.; 3.035% by weight; 0.607% by weight in terms of GABA; 6,070 mg of GABA per kg) were mixed together and matured in a container for 1-3 days into solidification, thereby providing GABA-mixed molasses feedstuff blocks. The prepared GABA-mixed molasses feedstuff blocks on the 4th day of production after maturation have penetration degree of 75.4 and exhibit physical properties enough for licking by cattle.

[Prescribed Embodiment 3)

Molasses (45.715% by weight), calcium phosphate (30% by weight), zeolite (2% by weight), alcohol (3% by weight), water (10% by weight), sodium chloride (3% by weight), tocopherol acetate (0.25% by weight) and Pharma GABA 20 (produced by Pharma Foods International Co., Ltd.; 6.035% by weight; 1.207% by weight in terms of GABA; 12,070 mg of GABA per kg) were mixed together and matured in a content for 1-3 days into solidification, thereby providing GABA-mixed molasses feedstuff blocks. The prepared GABA-mixed molasses feedstuff blocks on the 4th day of production after maturation have penetration degree of 73.0 and exhibit physical properties enough for licking by cattle.

[Test 3] Test for decrease in body weight of bred cattle through transportation

Carried out was test using bred beefs for comparing reduction in body weight during transportation between a case where the beefs were allowed to lick the GABA-mixed molasses feedstuff blocks and the other comparative examples.

Each plot was constituted by a group of four heads of Holstein steers (bred beefs) with average body weight of 350 kg. From 14 days before transportation to market as fattened candidate cattle, a group of bred beefs were fed with basic feedstuff (marketed feed mixture + Timothy hay) and allowed to lick GABA-mixed molasses feedstuff blocks (0.007% by weight in terms of GABA) of the prescribed Example 1 (average licked amount being about 14 kg/head/week; 140 mg/head/day in terms of GABA; 1960 mg of GABA per head, together with molasses). On the 15th day, the beefs were climbed onto a livestock lorry and transportation was conducted for about 3 hours; and body weights of the beefs before and after the transportation were measured by a cattle weighing machine to determine reduced body weights. Beefs of the other group in the control plot fed only with basic feedstuff (marketed mixed feed + Timothy hay) were climbed onto a livestock lorry and transportation was conducted for about 3 hours; and body weights of the beefs before and after the transportation were measured by a cattle weighing machine to determine reduced body weights. The test results are shown in Table 3.

Table 3

| Type of Plot | Control Plot | | | | Plot fed with Feedstock blocks | | | |
|---|---|---|---|---|---|---|---|---|
| Individual No. | 1 | 2 | 3 | 4 | 1 | 2 | 3 | 4 |
| Body wt.(kg) just before transportation | 357 | 441 | 347 | 360 | 332 | 355 | 391 | 356 |
| Body wt.(kg) just after transportati on | 347 | 427 | 335 | 347 | 328 | 344 | 384 | 347 |
| Reduced body wt. (kg) (difference between body wts. just before and just after transportation) | 10 | 14 | 12 | 13 | 4 | 11 | 7 | 9 |
| Average of reduced body wt. (n = 4) | 12.3 | | | | 7.8 | | | |
| Reduction ratio (%) | 2.80 | 3.17 | 3.46 | 3.61 | 1.20 | 3.10 | 1.79 | 2.53 |
| Average of reduction ratio (%) (n = 4) | 3.26 | | | | 2.16 | | | |

As is clear from the above table 3, the beefs allowed to freely lick the GABA-mixed molasses feedstuff blocks have reduced body weights which are significantly reduced ($p < 0.01$) to those of the control plot fed with no feedstock blocks. This is conceivable to be an effect due to relief of cattle stress. Thus, wasteful weight loss of beefs due to transportation is suppressed to substantially enhance production efficiency of beefs in livestock farms.

Moreover, as mentioned above, reduction in stress of beefs allowed to lick the GABA-mixed molasses feedstuff blocks reduced the beefs' behaviors of ramping about when they climbed upon and down from a lorry upon transportation because of their sensitivity to noises and the like. Furthermore, beefs' tendency of disfavor on their climbing onto a lorry upon transportation was reduced, which facilitated guiding or transportation work of beefs.

[Test 4] Test for evaluating meat characteristics

Carried out was test using beefs for comparing meat characteristics in a case where beefs were allowed to lick the GABA-mixed molasses feedstuff blocks of Prescribed Example 1 according to the invention and meat characteristics in the other comparative examples.

In Farm A, each plot was constituted by a group of 6 heads of Japanese Black steers. For a period of one month before transportation to market, a group of beefs were allowed to freely lick the GABA-mixed molasses feedstuff blocks of Prescribed Example 1 by about 7 kg/head/month on an average (16.3 mg/head/day in terms of GABA; 489 mg of GABA per head, together with molasses); then, the beefs were transported to and slaughtered in a slaughterhouse to examine their meat characteristics. Meat characteristics of the other control group or plot of beefs bred only with basic feedstuff were also examined.

In Farm B, each plot was constituted by a group of 11 heads of F1 steers (Holstein crossed with Japanese Black). For a period of one month before transportation to market, a group of beefs were allowed to freely lick the GABA-mixed molasses feedstuff blocks of Prescribed Example 1 by about 10 kg/head/month on an average (23.3 mg/head/day in terms of GABA; 699 mg of GABA per head, together with molasses); then, the beefs were transported to and slaughtered in a slaughterhouse to examine their meat characteristics. Meat characteristics of the other control group or plot of beefs bred only with basic feedstuff were also examined.

In Farm C, each plot was constituted by a group of 6 heads of Japanese Black steers. For a period of 5 days before transportation to market, the beefs were fed with the GABA-mixed molasses feedstuff block of Prescribed Example 1 admixed with basic feedstock by about 5 kg/head on an average (70 mg/head/day in terms of GABA; 350 mg of GABA per head, together with molasses); then, the beefs were transported to and slaughtered in a slaughterhouse to examine their meat characteristics. Meat characteristics of the other control group or plot of beefs bred only with the basic feedstuff were also examined.

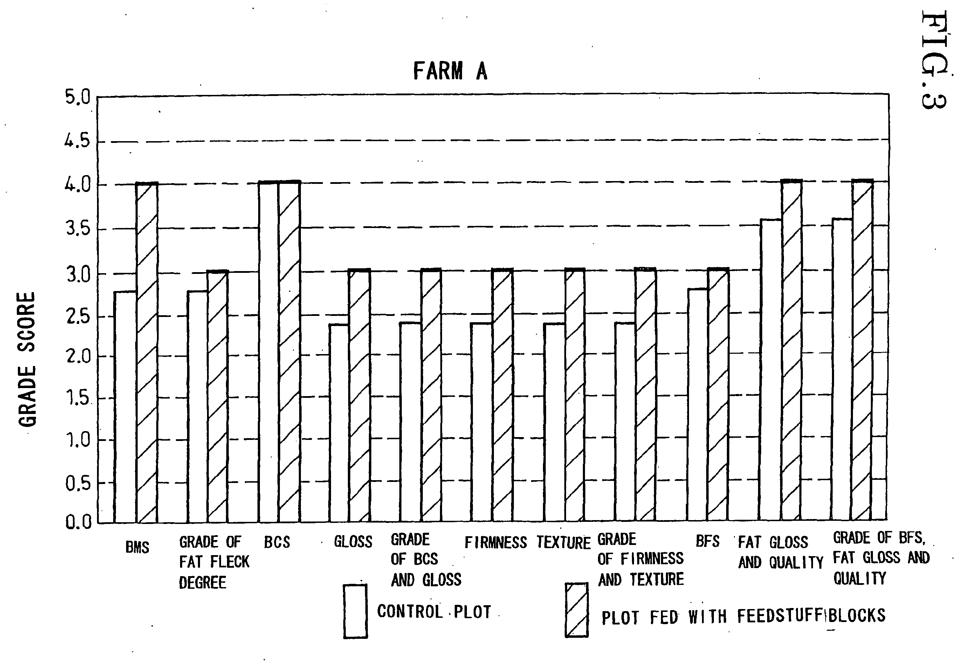

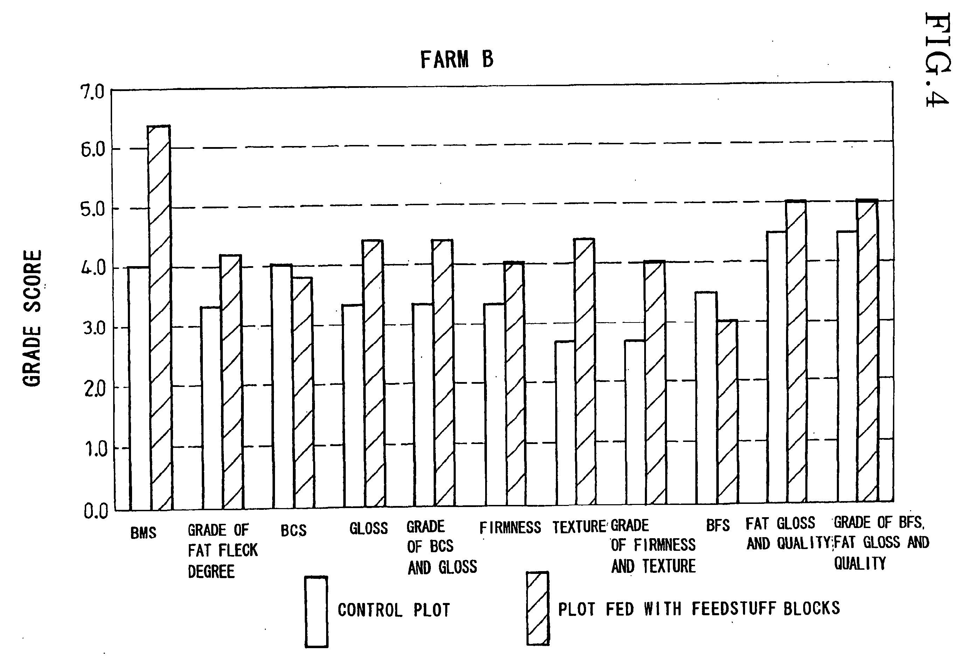

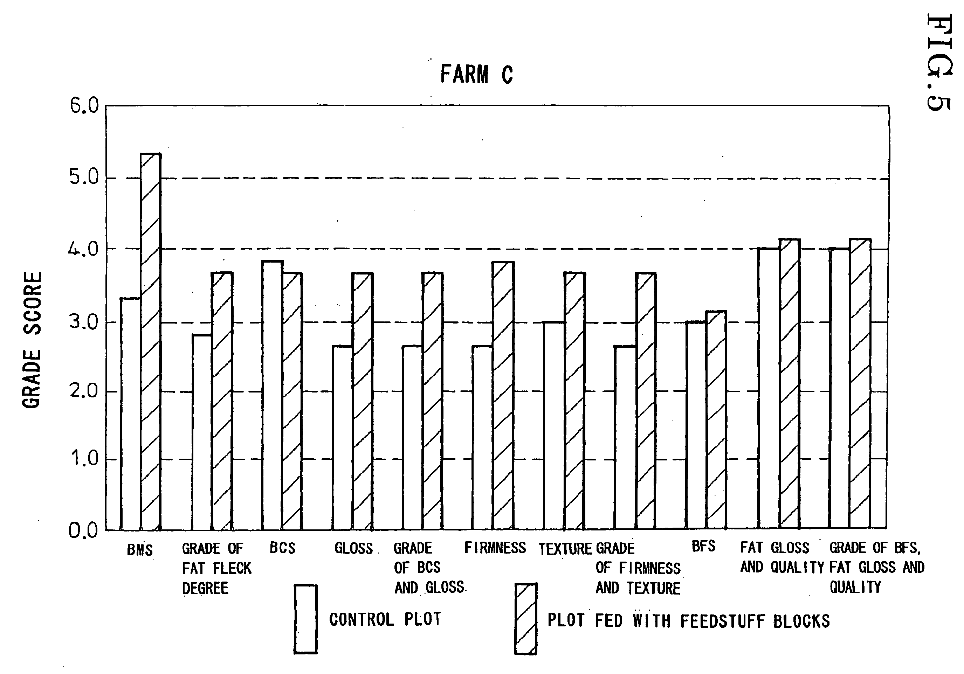

Test results in Farms A, B and C are shown in Figs. 3, 4 and 5.

Scores were calculated from carcass grading standard by Japan Meat Grading Association. In the figures, BMS represents marbling ratio (scores 3-4 being standard; scores 5-7 being relatively good; and scores 8-12 being considerably good); BCS, meat color (scores 3-5 being considerably good); and BFS, fat color (scores 1-4 being considerably good).

As is clear from the above-mentioned Figs. 3, 4 and 5, the beefs allowed to lick the GABA-mixed molasses feedstuff blocks have meat characteristics significantly increased ($p < 0.01$) in comparison with those of the control plot, which revealed that ingestion of GABA together with molasses improves meat characteristics. Such improvement in meat characteristics by ingestion of GABA and molasses in comparison with the control plot not fed with the same enhanced meat grade. Thus, livestock farms can delivery higher level of beefs.

It can be expected that ingestion of molasses by livestock through feeding of the feedstuff to the livestock as mentioned above relieves reduction of glycogen in muscles of livestock after their transportation. Moreover, when the feedstuff with vitamin E mixed therewith is allowed to be licked, it can be expected that change in meat color is suppressed due to antioxidative effect. Furthermore, when functional amino acid is mixed into the feedstuff, it can be expected that the stress-relieving effect is further enhanced by control of neurotransmission systems.

Licking of the solidified mixture of molasses with GABA in the form of GABA-mixed molasses feedstuff blocks by livestock causes the livestock to ingest GABA through licking stably and with no waste, so that GABA, which is expensive, can be effectively supplied to livestock. As cattle licks the GABA-mixed molasses feedstuff blocks by about 200 g - 2 kg per day, the following are derived from, for example, test results of Farm A in Test 4 showing ingestion of the feedstuff by 16.3 mg/head/day being effective:

$$16.3 \text{ mg}/200 \text{ g} = 0.00815\% \text{ by weight}$$

$$16.3 \text{ mg}/2 \text{ kg} = 0.000815\% \text{ by weight}$$

This means that, in general, the molasses feedstuff containing at least 0.001% by weight of GABA exhibits effect of GABA. Since the GABA ingested amount of 16.3 mg/day is effective for fattened cattle with body weight of more than 600 kg, it may be converted in terms of human with body weight of 60 kg into 1.63 mg. In comparison with minimum GABA amount per human per day which is said to be 30 mg, it is conceivable that ingestion of GABA together with molasses improves the effect of GABA by about 18 times.

According to the method of the invention, in which as mentioned above GABA mixed with molasses into feedstuff is fed to animal, the animal ingests GABA together with molasses, which enhances effectiveness due to ingestion of GABA in comparison with ingestion of GABA only, whereby stress of animal is reduced; meat characteristics are enhanced in the case of livestock, and reduction in body weight upon transportation of livestock can be effectively suppressed, whereby productivity of livestock is enhanced.

Reduction in stress of livestock relieves ramp of livestock sensitive to noises and livestock's disfavor on their climbing onto a lorry upon transportation, which facilitate guiding work and the like of livestock.

Ingestion of GABA together with molasses by livestock causes GABA to be effectively utilized for animal, so that an amount of GABA to be supplied to animal can be substantially reduced to thereby reduce cost upon supply of GABA to animal.

When GABA mixed with molasses and solidified into GABA-mixed molasses feedstuff blocks allows to be licked by animal, animal can ingest GABA stably and without waste through licking, whereby GABA, which is expensive, can be effectively supplied to animal.

**Claims**

**1.** A method for supply of γ-aminobutyric acid, **characterized in that** feedstuff which is a mixture of molasses with at least 0.001% by weight of γ-aminobutyric acid and which is solidified into blocks is fed to animal through licking whereby the animal is supplied with γ-aminobutyric acid together with molasses so as to relieve stress of animal.

2. A method for feeding γ-aminobutyric acid, **characterized in that** the feedstuff which is a mixture of molasses with at least 0,001% by weight of γ-aminobutyric acid and which is solidified into blocks is fed to animal through licking in a period from 4-30 days before transportation of livestock to just before the transportation, γ-aminobutyric acid is fed to livestock together with molasses, thereby suppressing reduction in body weight of livestock due to transportation.

**Patentansprüche**

1. Verfahren zur Zufuhr von γ-Aminobuttersäure, **dadurch gekennzeichnet, dass** ein Futtermittel, bei dem es sich um ein Gemisch von Melasse mit mindestens 0,001 Gew.-% γ-Aminobuttersäure handelt und das zu Blöcken verfestigt ist, an ein Tier durch Lecken verfüttert wird, wodurch dem Tier γ-Aminobuttersäure zusammen mit Melasse zugeführt wird, so dass beim Tier Stress abgebaut wird.

2. Verfahren zur Verfütterung von γ-Aminobuttersäure, **dadurch gekennzeichnet, dass** das Futtermittel, bei dem es sich um ein Gemisch von Melasse mit mindestens 0,001 Gew.-% γ-Aminobuttersäure handelt und das zu Blöcken verfestigt ist, an ein Tier durch Lecken in einem Zeitraum von 4 bis 30 Tagen vor einem Viehtransport bis unmittelbar vor dem Transport verfüttert wird, wobei γ-Aminobuttersäure zusammen mit Melasse an das Vieh verfüttert wird, wodurch eine Körpergewichtsverringerung des Viehs durch den Transport verringert wird.

**Revendications**

1. Procédé d'alimentation avec de l'acide γ-aminobutyrique, **caractérisé en ce que** l'aliment pour animaux qui est un mélange de mélasses présentant au moins 0,001 % en poids d'acide γ-aminobutyrique et qui est solidifié en blocs est fourni à un animal sous une forme à lécher grâce à quoi l'animal est alimenté en acide γ-aminobutyrique ainsi qu'en mélasses de manière à réduire le stress de l'animal.

2. Procédé d'alimentation avec de l'acide γ-aminobutyrique **caractérisé en ce que** l'aliment pour animaux qui est un mélange de mélasses présentant au moins 0,001 % en poids d'acide γ-aminobutyrique et qui est solidifié en blocs est fourni à un animal sous une forme à lécher dans une période allant de 4 à 30 jours avant un transport de bétail jusqu'à un instant juste avant le transport, l'acide γ-aminobutyrique est fourni au bétail en même temps que les mélasses, en supprimant de cette manière la réduction de masse corporelle du bétail due au transport.

# FIG.1

MOLASSES

γ -AMINOBUTYRIC ACID (GABA)

MIXED

FEEDSTUFF BLOCK

# FIG.2

# FIG.3

EP 1 752 049 B1

FIG.4

12

# FIG.5

FARM C

GRADE SCORE

BMS   GRADE OF   BCS   GLOSS   GRADE   FIRMNESS   TEXTURE GRADE   BFS   FAT GLOSS   GRADE OF BFS,
      FAT FLECK                OF BCS                    OF FIRMNESS          AND QUALITY FAT GLOSS AND
      DEGREE                   AND GLOSS                 AND TEXTURE                      QUALITY

☐ CONTROL PLOT          ▨ PLOT FED WITH FEEDSTUFF BLOCKS

EP 1 752 049 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2891296 B
- JP 2003024015 A
- JP 2002065175 A
- BE 686921
- WO 03013495 A1
- US 4005192 A
- GB 1315174 A

**Non-patent literature cited in the description**

- *Appl. Microbiol.,* September 1967, 1091-1094